# EUROPEAN PATENT APPLICATION

(11) **EP 4 717 879 A1**
(43) Date of publication of application: **01.04.2026**
(21) Application number: 25202579.6
(22) Date of filing: 16.09.2025
(51) Int. Cl.: F01D 5/18

(54) **TURBINE ENGINE AIRFOIL WITH COOLING HOLE PATTERN**

(30) Priority: 16.09.2024 US 202418886500
(71) Applicant: RTX Corporation, Farmington, CT 06032 (US)
(72) Inventor: SKIDELSKY, Vladimir, West Hartford, 06107 (US); TELLER, Bret M., Meriden, 06450 (US); THORNTON, Lane M., Tolland, 06084 (US); BECKETT, Rachel Y., West Hartford, 06107 (US); ARCHAMBEAU, Jennifer H., Ludlow, 01056 (US); JENNINGS, Timothy, Coatesville, 19320 (US); BAKER, Carolyn F., Manchester, 06040 (US); YUAN, Lifang, Glastonbury, 06033 (US)
(74) Representative: Dehns

(57) **Abstract**

An apparatus is provided for a turbine engine (20). This turbine engine apparatus includes an airfoil (84), and the airfoil (84) includes a first end (88), a second end (90), a leading edge (92), a trailing edge (94), a first side (98), a second side (100) and a plurality of cooling holes (86). The leading edge (92), the trailing edge (94), the first side (98) and the second side (100) extend spanwise from the first end (88) to the second end (90). The first side (98) and the second side (100) extend longitudinally between and meet at the leading edge (92) and the trailing edge (94). The cooling holes (86) are located in the airfoil (84) according to a set of Cartesian coordinates of Table 1, and the set of Cartesian coordinates of Table 1 describe distances from a point of origin (104) on the airfoil (84) to the cooling holes (86).

## Description

### Technical Field

This disclosure relates generally to a turbine engine and, more particularly, to an airfoil for the turbine engine.

### Background Information

A turbine rotor in a gas turbine engine includes a plurality of turbine blades arranged circumferentially around an axis in an array. Various airfoil designs are known in the art for such turbine blades. Various cooling schemes are also known in the art for such turbine blades. While these known airfoil designs and cooling schemes have various benefits, there is still room in the art for improvement.

### SUMMARY OF THE DISCLOSURE

According to an aspect of the present invention, an apparatus is provided for a turbine engine. This turbine engine apparatus includes an airfoil, and the airfoil includes a first end, a second end, a leading edge, a trailing edge, a first side, a second side and a plurality of cooling holes. The leading edge, the trailing edge, the first side and the second side extend spanwise from the first end to the second end. The first side and the second side extend longitudinally between and meet at the leading edge and the trailing edge. The cooling holes are located in the airfoil according to a set of Cartesian coordinates of Table 1, and the set of Cartesian coordinates of Table 1 describe distances from a point of origin on the airfoil to the cooling holes.

According to another aspect of the present invention, another apparatus is provided for a turbine engine. This turbine engine apparatus includes a rotor blade, and the rotor blade includes an attachment, a platform, an airfoil and a plurality of cooling holes. The platform is between and is integral with the attachment and the airfoil. The airfoil includes a tip end, a leading edge, a trailing edge, a first side and a second side. The airfoil projects spanwise out from the platform to the tip end. The first side and the second side extend longitudinally between and meet at the leading edge and the trailing edge. The cooling holes are located in the rotor blade according to a set of Cartesian coordinates of Table 1, and the set of Cartesian coordinates of Table 1 describe distances from a point of origin on the airfoil to the cooling holes.

According to still another aspect of the present invention, a turbine engine is provided that includes a flowpath, a compressor section, a combustor section and a turbine section. The flowpath extends through the compressor section, the combustor section and the turbine section from an inlet into the flowpath to an exhaust from the flowpath. The turbine section includes a turbine rotor with a plurality of turbine blades arranged circumferentially about an axis in an array. A first of the turbine blades includes an airfoil and a plurality of cooling holes. The airfoil is located in the flowpath. The airfoil includes a leading edge, a trailing edge, a suction side and a pressure side. The suction side and the pressure side extend longitudinally between and meet at the leading edge and the trailing edge. The cooling holes are located in the airfoil according to a set of Cartesian coordinates of Table 1, and the set of Cartesian coordinates of Table 1 describe distances from a point of origin on the airfoil to the cooling holes.

In an embodiment of the above, the turbine section may include a high pressure turbine section and a low pressure turbine section. The high pressure turbine section may include the turbine rotor.

In an embodiment according to any of the previous embodiments, the first of the turbine blades may also include a plurality of additional cooling holes located in the first of the turbine blades according to a set of Cartesian coordinates of Table 2. The set of Cartesian coordinates of Table 2 may describe distances from the point of origin on the airfoil to the additional cooling holes.

In an embodiment according to any of the previous embodiments, the rotor blade may also include a plurality of additional cooling holes located in the rotor blade according to a set of Cartesian coordinates of Table 2. The set of Cartesian coordinates of Table 2 may describe distances from the point of origin on the airfoil to the additional cooling holes.

In an embodiment according to any of the previous embodiments, the point of origin may be coincident with a radially innermost one of the cooling holes in a downstream-most set of the cooling holes.

In an embodiment according to any of the previous embodiments, the apparatus may be configured as or otherwise include a first stage turbine blade.

In an embodiment according to any of the previous embodiments, the point of origin may be located in a region of the airfoil adjacent the first end and the trailing edge.

In an embodiment according to any of the previous embodiments, the point of origin may be located on the first side.

In an embodiment according to any of the previous embodiments, the point of origin may be coincident with one of the cooling holes.

In an embodiment according to any of the previous embodiments, the cooling holes may be located on the first side.

In an embodiment according to any of the previous embodiments, the first side may be a concave side of the airfoil.

In an embodiment according to any of the previous embodiments, the apparatus may also include a platform. The airfoil may be connected to the platform at the first end. The airfoil may project spanwise out from the platform to the second end.

In an embodiment according to any of the previous embodiments, the set of Cartesian coordinates set forth in the Table 1 may have a diametrical true position tolerance of up to 0.040 inches (0.102 cm).

In an embodiment according to any of the previous embodiments, a first of the cooling holes may have a hole diameter between 0.010 inches (0.025cm) and 0.030 inches (0.076 cm).

In an embodiment according to any of the previous embodiments, the apparatus may be configured as or otherwise include a turbine blade.

In an embodiment according to any of the previous embodiments, the turbine blade may be a high pressure turbine blade.

In an embodiment according to any of the previous embodiments, the cooling holes may be fluidly coupled to one or more internal volumes within the airfoil.

In an embodiment according to any of the previous embodiments, the apparatus may also include a rotor blade, and the rotor blade may include the airfoil and a plurality of additional cooling holes. The additional cooling holes may be located in the rotor blade according to a set of Cartesian coordinates of Table 2. The set of Cartesian coordinates of Table 2 may describe distances from the point of origin on the airfoil to the additional cooling holes.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of a turbine engine.
FIG. 2 is a partial schematic illustration of a section of the turbine engine.
FIG. 3 is a perspective illustration of a concave, pressure side of a rotor blade.
FIG. 4 is a perspective illustration of a convex, suction side of the rotor blade.
FIG. 5 is a schematic illustration of a cooling hole at its outlet.
FIG. 6 is a schematic illustration of the cooling hole depicting its width.

### DETAILED DESCRIPTION

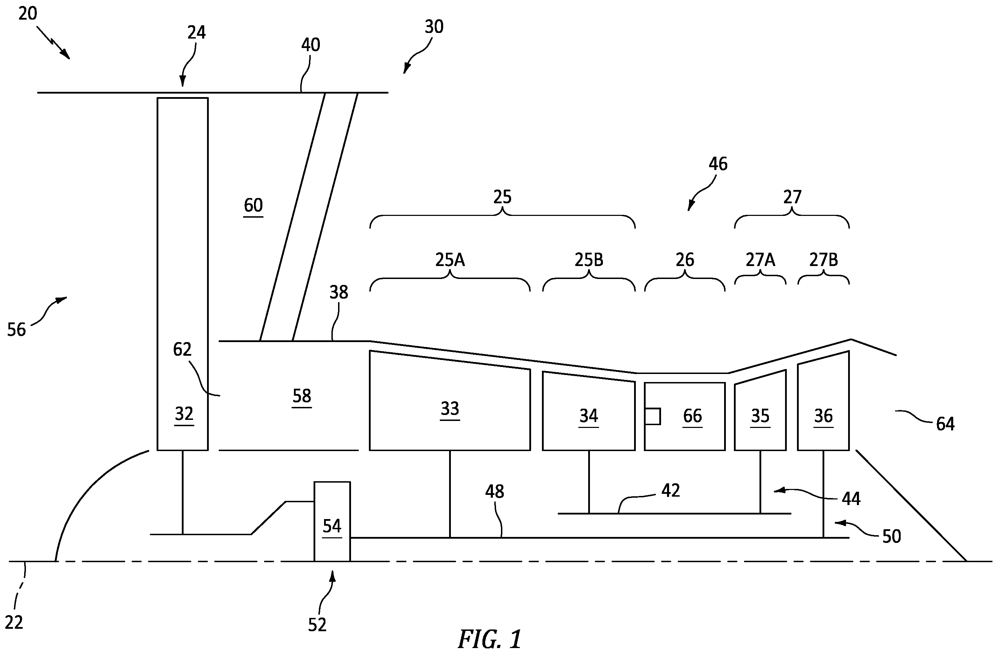

FIG. 1 illustrates a gas turbine engine 20 of a propulsion system for an aircraft. The aircraft may be an airplane, a drone (e.g., an unmanned aerial vehicle (UAV)), or any other manned or unmanned aerial vehicle or system. For ease of description, the aircraft propulsion system is described below as a ducted rotor propulsion system such as a turbofan propulsion system, and the turbine engine 20 is described below as a turbofan engine. The present disclosure, however, is not limited to such an exemplary aircraft propulsion system. The aircraft propulsion system, for example, may alternatively be configured as a turbojet propulsion system, a turboprop propulsion system, a turboshaft propulsion system or an open rotor propulsion system. Moreover, the present disclosure is not limited to propulsion system applications. The turbine engine 20, for example, may alternatively be configured as or included as part of an auxiliary power unit (APU) for the aircraft or a ground-based (e.g., industrial) electrical power system.

The turbine engine 20 of FIG. 1 extends axially along an axis 22 between a forward, upstream end of the turbine engine 20 and an aft, downstream end of the turbine engine 20. Briefly, the axis 22 may be a centerline axis of the turbine engine 20 and/or one or more of its members. The axis 22 may also or alternatively be a rotational axis for one or more members of the turbine engine 20. The turbine engine 20 of FIG. 1 includes a propulsor section 24 (e.g., a fan section), a compressor section 25, a combustor section 26 and a turbine section 27. The compressor section 25 includes a low pressure compressor (LPC) section 25A and a high pressure compressor (HPC) section 25B. The turbine section 27 includes a high pressure turbine (HPT) section 27A and a low pressure turbine (LPT) section 27B.

The engine sections 24-27B may be arranged sequentially along the axis 22 within a stationary engine housing 30. The propulsor section 24 includes a bladed propulsor rotor 32; e.g., a fan rotor. The LPC section 25A includes a bladed low pressure compressor (LPC) rotor 33. The HPC section 25B includes a bladed high pressure compressor (HPC) rotor 34. The HPT section 27A includes a bladed high pressure turbine (HPT) rotor 35. The LPT section 27B includes a bladed low pressure turbine (LPT) rotor 36. These engine rotors 32-36 are housed within the engine housing 30. The engine housing 30 of FIG. 1, for example, includes an inner housing structure 38 (e.g., a core case structure) and an outer housing structure 40 (e.g., a propulsor case structure). The inner housing structure 38 may house one or more of the engine sections 25A-27B and their engine rotors 33-36. The outer housing structure 40 may house at least the propulsor section 24 and its propulsor rotor 32.

The HPC rotor 34 is coupled to and rotatable with the HPT rotor 35. The HPC rotor 34 of FIG. 1, for example, is connected to the HPT rotor 35 through a high speed shaft 42. At least (or only) the HPC rotor 34, the HPT rotor 35 and the high speed shaft 42 collectively form a high speed rotating assembly 44; e.g., a high speed spool of a core 46 of the turbine engine 20. This high speed rotating assembly 44 of FIG. 1 and its members 34, 35 and 42 are rotatable about the axis 22.

The LPC rotor 33 is coupled to and rotatable with the LPT rotor 36. The LPC rotor 33 of FIG. 1, for example, is connected to the LPT rotor 36 through a low speed shaft 48. At least (or only) the LPC rotor 33, the LPT rotor 36 and the low speed shaft 48 collectively form a low speed rotating assembly 50; e.g., a low speed spool of the engine core 46. This low speed rotating assembly 50 is further coupled to the propulsor rotor 32 through a drivetrain 52. This drivetrain 52 may be configured as a geared drivetrain, where a geartrain 54 (e.g., a transmission, a speed change device, an epicyclic geartrain, etc.) is disposed between and operatively couples the propulsor rotor 32 to the low speed rotating assembly 50 and its LPT rotor 36. With this arrangement, the propulsor rotor 32 may rotate at a different (e.g., slower) rotational speed than the low speed rotating assembly 50 and its LPT rotor 36. Here, the propulsor rotor 32 and the low speed rotating assembly 50 may rotate in a common (the same) direction about the axis 22 or in opposite directions about the axis 22 depending, for example, upon the specific configuration of the geartrain 54. Alternatively, the drivetrain 52 may be configured as a direct drive drivetrain, where the geartrain 54 is omitted. With such an arrangement, the propulsor rotor 32 rotates at a common (the same) rotational speed as the low speed rotating assembly 50 and its LPT rotor 36. The low speed rotating assembly 50 of FIG. 1 and its members 33, 36 and 48 as well as the propulsor rotor 32 are rotatable about the axis 22.

During operation, ambient air from outside of the aircraft enters the aircraft propulsion system and its turbine engine 20 through an airflow inlet 56. This air is directed across the propulsor section 24 and into a (e.g., annular) core flowpath 58 and a (e.g., annular) bypass flowpath 60. The core flowpath 58 of FIG. 1 extends sequentially through the LPC section 25A, the HPC section 25B, the combustor section 26, the HPT section 27A and the LPT section 27B from an airflow inlet 62 into the core flowpath 58 to a combustion products exhaust 64 out from the core flowpath 58 and the engine core 46. The air entering the core flowpath 58 may be referred to as "core air". The bypass flowpath 60 extends through a bypass duct, where the bypass flowpath 60 bypasses (e.g., is disposed radially outboard of and extends along) the engine core 46. The air within the bypass flowpath 60 may be referred to as "bypass air".

The core air is compressed by the LPC rotor 33 and the HPC rotor 34 and is directed into a (e.g., annular) combustion chamber 66 of a (e.g., annular) combustor in the combustor section 26. Fuel is injected into the combustion chamber 66 by one or more fuel injectors and mixed with the compressed core air to provide a fuel-air mixture. This fuel-air mixture is ignited and combustion products thereof flow through and sequentially drive rotation of the HPT rotor 35 and the LPT rotor 36 about the axis 22. The rotation of the HPT rotor 35 and the LPT rotor 36 respectively drive rotation of the HPC rotor 34 and the LPC rotor 33 about the axis 22 and, thus, compression of the air received from the core inlet 62. The rotation of the LPT rotor 36 also drives rotation of the propulsor rotor 32. The rotation of the propulsor rotor 32 propels the bypass air through and out of the bypass flowpath 60. The propulsion of the bypass air may account for a majority of thrust generated by the turbine engine 20 of FIG. 1, e.g., more than seventy-five percent (75%) of engine thrust. The turbine engine 20 of the present disclosure, however, is not limited to the foregoing exemplary thrust ratio.

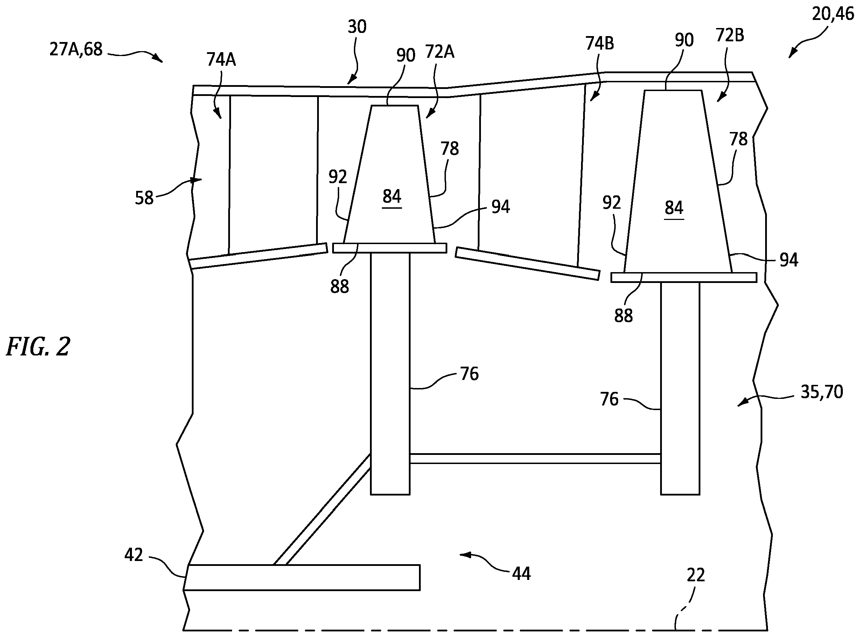

FIG. 2 illustrates a section 68 of the turbine engine 20. For ease of description, this engine section 68 is described below as the HPT section 27A in the turbine engine 20. However, it is contemplated the engine section 68 may alternatively be the LPT section 27B in the turbine engine 20 (see FIG. 1).

The engine section 68 of FIG. 2 includes an engine rotor 70 (e.g., the HPT rotor 35) with a plurality of rotor stages 72A and 72B (generally referred to as "72"). This engine section 68 also includes a plurality of stator vane structures 74A and 74B (generally referred to as "74") interspersed with the rotor stages 72A and 72B. The first rotor stage 72A of FIG. 2, for example, is located next to and between the first stator vane structure 74A and the second stator vane structure 74B along the core flowpath 58. The second rotor stage 72B of FIG. 2 is located next to and downstream of the second stator vane structure 74B along the core flowpath 58. Here, the engine section 68 is shown as a two-stage section of the turbine engine 20; e.g., a two-stage HPT section. It is contemplated, however, the engine section 68 and its engine rotor 70 may alternatively be configured with a single stage or more than two stages.

Each rotor stage 72 includes a rotor disk 76 (e.g., a turbine disk) and a plurality of rotor blades 78 (e.g., turbine blades) mounted to the rotor disk 76. The rotor blades 78 are arranged and equispaced circumferentially around the rotor disk 76 and the axis 22 in an annular array; e.g., a circular array. Each of these rotor blades 78 projects spanwise (e.g., radially) out from the rotor disk 76 into the core flowpath 58.

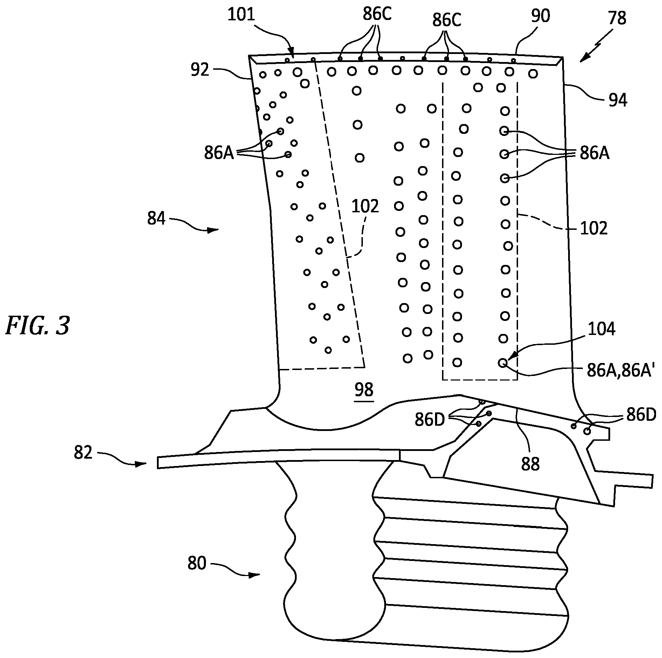

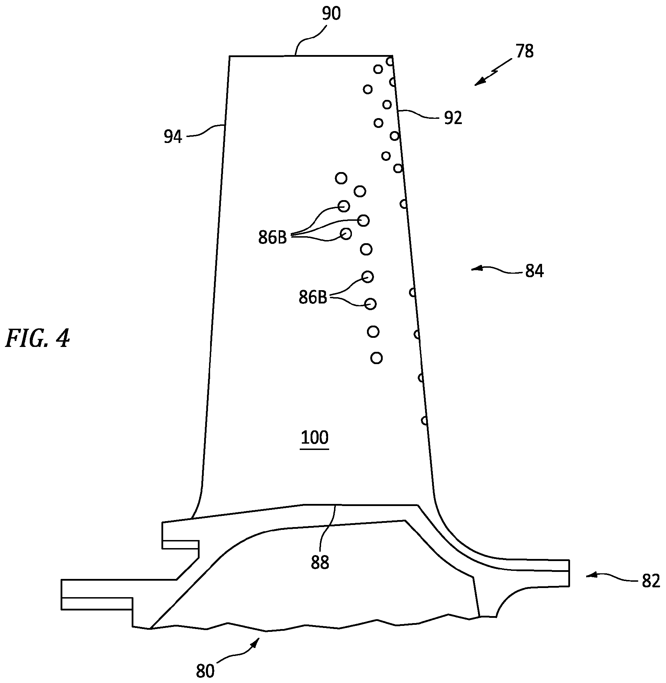

Referring to FIGS. 3 and 4, each rotor blade 78 includes a blade attachment 80, a blade platform 82 and a blade airfoil 84. Each rotor blade 78 of FIGS. 3 and 4 also includes one or more sets of cooling holes 86A-D (generally referred to as "86"), some of which are labeled for clarity of illustration.

The blade attachment 80 is configured to mount the respective rotor blade 78 to the rotor disk 76 (see FIG. 2). The blade attachment 80, for example, may be configured as or otherwise include a firtree root, a dovetail root or another type of root configured to mate with a corresponding slot in the rotor disk. When mated with the disk slot, the blade attachment 80 mechanically attaches the respective rotor blade 78 to the rotor disk.

The blade platform 82 is disposed radially between the blade attachment 80 and the blade airfoil 84. The blade platform 82 is also connected to (e.g., formed integral with or otherwise attached to) the blade attachment 80 and the blade airfoil 84. The blade platform 82 of FIGS. 3 and 4 is configured to form a radial inner peripheral boundary of the core flowpath 58 (see FIG. 2) about the blade airfoil 84.

The blade airfoil 84 extends spanwise (e.g., radially relative to the axis 22 of FIG. 2) between a radial inner base end 88 of the blade airfoil 84 and a radial outer tip end 90 of the blade airfoil 84. Here, the blade airfoil 84 is connected to the blade platform 82 at the airfoil base end 88. The blade airfoil 84 of FIGS. 3 and 4 thereby projects spanwise out from the blade platform 82 to the airfoil tip end 90. The blade airfoil 84 extends longitudinally along a mean line (e.g., a camber line) of the blade airfoil 84 from a leading edge 92 of the blade airfoil 84 to a trailing edge 94 of the blade airfoil 84. The blade airfoil 84 extends laterally between a concave, pressure side 98 of the blade airfoil 84 (see FIG. 3) and a convex, suction side 100 of the blade airfoil 84 (see FIG. 4). The airfoil suction side 100 and the airfoil pressure side 98 extend longitudinally between and meet at the airfoil leading edge 92 and the airfoil trailing edge 94. The airfoil leading edge 92, the airfoil trailing edge 94, the airfoil suction side 100 and the airfoil pressure side 98 may each extend spanwise out from the airfoil base end 88 / the blade platform 82 to (or about) the airfoil tip end 90. The blade airfoil 84 may also include a tip shelf 101 (see FIG. 3) extending longitudinally along the airfoil pressure side 98 at (e.g., on, adjacent or proximate) the airfoil tip end 90.

The cooling holes 86 are configured to provide film cooling to the respective rotor blade 78. The cooling holes 86, for example, are fluidly coupled with one or more internal volumes (e.g., 102 in FIG. 3) (e.g., internal passages) within the respective rotor blade 78 and its blade airfoil 84. Each of these cooling holes 86 is configured to exhaust cooling air (e.g., compressed air previously bled from the compressor section 25 of FIG. 1 or a diffuser plenum) out of the respective internal volume (e.g., 102 in FIG. 3) and into the core flowpath 58. The cooling air exhausted from the cooling holes 86 may flow along an exterior of the respective rotor blade 78 thereby film cooling the exterior of that rotor blade 78. The exhausted cooling air, for example, may provide a buffer between the combustion products flowing within the core flowpath 58 and the exterior of the respective rotor blade 78. Of course, the cooling air also locally cools material of the respective rotor blade 78 that forms and is disposed proximate the respective cooling holes 86.

Referring to FIG. 3, the pressure side cooling holes 86A are arranged on and along the airfoil pressure side 98. The tip cooling holes 86C are arranged along the airfoil tip end 90 on the tip shelf 101 and along the airfoil pressure side 98. Referring to FIG. 4, the suction side cooling holes 86B are arranged on and along the airfoil suction side 100. With this arrangement, the cooling holes 86A-C are distributed along and formed in the blade airfoil 84. By contrast, referring to FIGS. 3 and 4, the platform cooling holes 86D are distributed along and formed in the blade platform 82.

The pressure side cooling holes 86A of FIG. 3 are arranged according to a set of Cartesian coordinates of Table 1. This set of Cartesian coordinates of Table 1 describes a distance from a point of origin 104 (e.g., a zero-coordinate) on the blade airfoil 84 to a center of each pressure side cooling hole 86A. More particularly, in Table 1, X, Y and Z dimensions define the distance from the point of origin 104 to the center of each pressure side cooling hole 86A along X, Y and Z directions. The X, Y and Z directions respectively correspond to axial (X), circumferential (Y) and radial (Z) directions relative to the axis 22. The point of origin 104 may be coincident with one of the pressure side cooling holes 86A in FIG. 3; e.g., cooling hole 86A'. The point of origin 104 of FIG. 3 is located in a region (e.g., a quadrant) of the blade airfoil 84 adjacent the airfoil base end 88 and the airfoil trailing edge 94, on the airfoil pressure side 98. Here, the pressure side cooling hole 86A' that is coincident with the point of origin 104 is a radial innermost cooling hole in a downstream-most set of the pressure side cooling holes 86A; e.g., the pressure side cooling hole 86A located closest to the airfoil base end 88 and the airfoil trailing edge 94. The present disclosure, however, is not limited to such an exemplary arrangement. For example, it is contemplated the blade airfoil 84 may (or may not) be configured with one or more additional cooling holes other than those shown in FIGS. 3 and 4, where one or more of these additional cooling holes may be arranged between the point of origin 104 and the airfoil member 88, 94 on the airfoil pressure side 98.

| **TABLE 1** | | |
|---|---|---|
| **X** | **Y** | **Z** |
| -0.4562 | 0.4835 | 0.0972 |
| -0.4322 | 0.5020 | 0.2421 |
| -0.4179 | 0.5273 | 0.3857 |
| -0.3966 | 0.5528 | 0.5277 |
| -0.3869 | 0.5897 | 0.6701 |
| -0.4060 | 0.6514 | 0.8130 |
| -0.4110 | 0.6933 | 0.9338 |
| -0.4059 | 0.7167 | 1.0426 |
| -0.4060 | 0.7422 | 1.1481 |
| -0.3932 | 0.7681 | 1.2483 |
| -0.5219 | 0.5341 | 0.0496 |
| -0.5063 | 0.5445 | 0.1927 |
| -0.4877 | 0.5571 | 0.3360 |
| -0.4721 | 0.5830 | 0.4783 |
| -0.4600 | 0.6230 | 0.6218 |
| -0.4461 | 0.6648 | 0.7644 |
| -0.4434 | 0.7090 | 0.8912 |
| -0.4425 | 0.7383 | 0.9855 |
| -0.4369 | 0.7716 | 1.1080 |
| -0.4226 | 0.8143 | 1.2323 |
| -0.5131 | 0.5952 | 0.0983 |
| -0.5031 | 0.6011 | 0.2414 |
| -0.4884 | 0.6248 | 0.3844 |
| -0.4742 | 0.6549 | 0.5276 |
| -0.4655 | 0.6804 | 0.6712 |
| -0.4505 | 0.7395 | 0.8150 |
| -0.4341 | 0.7847 | 0.9438 |
| -0.4291 | 0.7993 | 1.0478 |
| -0.3972 | 0.8403 | 1.1579 |
| -0.3711 | 0.8704 | 1.2687 |
| -0.3969 | 0.8258 | 0.9800 |
| -0.3693 | 0.8504 | 1.0864 |
| -0.3395 | 0.8672 | 1.2002 |
| 0.0000 | 0.0000 | 0.0000 |
| -0.0026 | -0.0040 | 0.0984 |
| -0.0043 | -0.0070 | 0.1968 |
| -0.0051 | -0.0093 | 0.2953 |
| -0.0053 | -0.0109 | 0.3938 |
| -0.0057 | -0.0112 | 0.4923 |
| -0.0070 | -0.0096 | 0.5908 |
| -0.0095 | -0.0062 | 0.6891 |
| -0.0128 | -0.0029 | 0.7876 |
| -0.0168 | -0.0014 | 0.8859 |
| -0.0211 | -0.0036 | 0.9843 |
| -0.0247 | -0.0109 | 1.0825 |
| -0.1105 | 0.1501 | 0.0064 |
| -0.1061 | 0.1476 | 0.1000 |
| -0.1019 | 0.1473 | 0.1997 |
| -0.0975 | 0.1484 | 0.2997 |
| -0.0926 | 0.1494 | 0.3999 |
| -0.0876 | 0.1491 | 0.5002 |
| -0.0874 | 0.1559 | 0.6003 |
| -0.0854 | 0.1558 | 0.7003 |
| -0.0876 | 0.1609 | 0.8004 |
| -0.0832 | 0.1470 | 0.8996 |
| -0.0806 | 0.1306 | 1.0008 |
| -0.0796 | 0.1170 | 1.0809 |
| -0.1853 | 0.2379 | 0.0339 |
| -0.1794 | 0.2439 | 0.1299 |
| -0.1707 | 0.2473 | 0.2259 |
| -0.1641 | 0.2538 | 0.3219 |
| -0.1576 | 0.2600 | 0.4179 |
| -0.1502 | 0.2627 | 0.5139 |
| -0.1454 | 0.2664 | 0.6099 |
| -0.1426 | 0.2704 | 0.7159 |
| -0.1405 | 0.2712 | 0.8229 |
| -0.1368 | 0.2627 | 0.9410 |
| -0.1318 | 0.2414 | 1.0859 |
| -0.2505 | 0.2999 | 0.0154 |
| -0.2391 | 0.3112 | 0.1249 |
| -0.2268 | 0.3205 | 0.2337 |
| -0.2149 | 0.3287 | 0.3428 |
| -0.2042 | 0.3363 | 0.4520 |
| -0.1954 | 0.3432 | 0.5614 |
| -0.1893 | 0.3495 | 0.6711 |
| -0.1842 | 0.3526 | 0.7809 |
| -0.1774 | 0.3488 | 0.9309 |
| -0.1743 | 0.3441 | 1.0859 |
| -0.0336 | -0.0035 | 1.1734 |
| -0.0655 | 0.0704 | 1.1734 |
| 0.0044 | -0.1054 | 1.2342 |
| -0.0286 | -0.0222 | 1.2362 |
| -0.0610 | 0.0520 | 1.2399 |
| -0.0927 | 0.1267 | 1.2429 |
| -0.1244 | 0.2053 | 1.2429 |
| -0.1551 | 0.2855 | 1.2429 |
| -0.1847 | 0.3659 | 1.2429 |
| -0.2149 | 0.4475 | 1.2429 |
| -0.2424 | 0.5187 | 1.2401 |
| -0.2692 | 0.5828 | 1.2366 |
| -0.2535 | 0.4841 | 0.8752 |
| -0.2474 | 0.4974 | 1.0131 |
| -0.2384 | 0.5009 | 1.1555 |
| -0.3242 | 0.6763 | 1.1809 |
| -0.3316 | 0.7013 | 1.2309 |

The locations of the pressure side cooling holes 86A described by the set of Cartesian coordinates of Table 1 are disposed on an exterior surface of the blade airfoil 84. Each of these pressure side cooling holes 86A extends inward from its respective exterior surface location through a wall of the blade airfoil 84 to the respective internal volume (e.g., 102 in FIG. 3).

The remaining cooling holes 86B-D of FIGS. 3 and 4 may be arranged according to a set of Cartesian coordinates of Table 2. This set of Cartesian coordinates of Table 2 describes a distance from the point of origin 104 to a center of each cooling hole 86B, 86C, 86D. More particularly, in Table 2, X, Y and Z dimensions define the distance from the point of origin 104 to the center of each cooling hole 86B, 86C, 86D along X, Y and Z directions. The X, Y and Z directions respectively correspond to axial (X), circumferential (Y) and radial (Z) directions relative to the axis 22.

| **TABLE 2** | | |
|---|---|---|
| **X** | **Y** | **Z** |
| -0.0503 | -0.1137 | -0.2202 |
| -0.1453 | -0.0806 | -0.1971 |
| -0.2333 | -0.0222 | -0.1818 |
| -0.3210 | 0.0041 | -0.1705 |
| -0.3930 | 0.0091 | -0.1667 |
| 0.1906 | 0.5423 | -0.2408 |
| 0.1739 | 0.3343 | -0.2337 |
| 0.1668 | -0.2774 | -0.3063 |
| 0.0818 | -0.2487 | -0.2833 |
| -0.4766 | -0.0464 | -0.2338 |
| -0.5379 | -0.0171 | -0.2825 |
| -0.3695 | 0.7672 | 0.3073 |
| -0.3613 | 0.7751 | 0.3978 |
| -0.3530 | 0.7836 | 0.4890 |
| -0.3445 | 0.7927 | 0.5811 |
| -0.3358 | 0.8030 | 0.6746 |
| -0.3267 | 0.8153 | 0.7706 |
| -0.3175 | 0.8282 | 0.8675 |
| -0.2766 | 0.7988 | 0.7277 |
| -0.2658 | 0.8039 | 0.8177 |
| -0.2571 | 0.8092 | 0.9126 |
| -0.0089 | -0.0314 | 1.2920 |
| -0.0431 | 0.0419 | 1.2949 |
| -0.0758 | 0.1158 | 1.2973 |
| -0.1058 | 0.1902 | 1.2992 |
| -0.1344 | 0.2651 | 1.3003 |
| -0.1620 | 0.3405 | 1.3008 |
| -0.1892 | 0.4159 | 1.3006 |
| -0.2168 | 0.4913 | 1.2997 |
| -0.2458 | 0.5659 | 1.2981 |
| -0.2777 | 0.6517 | 1.2956 |
| -0.3375 | 0.7365 | 1.2901 |
| -0.3832 | 0.8023 | 1.2882 |
| -0.1441 | 0.4797 | 1.3460 |
| -0.2275 | 0.6818 | 1.3405 |

The locations of the cooling holes 86B-D described by the set of Cartesian coordinates of Table 2 are disposed on exterior surfaces of the respective rotor blade 78 and its members 82 and/or 84. Each of these cooling holes 86B-D extends inward from its respective exterior surface location through a wall of the respective rotor blade member 82, 84 to the respective internal volume (e.g., 102 in FIG. 3).

The centers of the cooling holes 86 of FIGS. 3 and 4 located in the Tables 1 and/or 2 may each have a diametrical true position tolerance of up to 0.040 inches (0.102 cm) due to manufacturing tolerances. Alternatively, the centers of the cooling holes 86 located in the Tables 1 and/or 2 may each have a diametrical true position tolerance of up to 0.030 inches (0.076 cm) due to manufacturing tolerances. Still alternatively, the centers of the cooling holes 86 located in the Tables 1 and/or 2 may each have a diametrical true position tolerance of up to 0.020 inches (0.051 cm) due to manufacturing tolerances. In general, the foregoing tolerances are constant or not scalable, and apply to each of the specified cooling hole locations, regardless of rotor blade and/or airfoil size.

Substantial conformance with the sets of Cartesian coordinates of Tables 1 and 2 is based on points representing the cooling hole locations, for example in inches or millimeters, as determined by selective particular values of scaling parameters. A substantially conforming rotor blade or airfoil has cooling holes that conform to the specified sets of Cartesian coordinates, within the specified tolerance.

Alternatively, substantial conformance is based on a determination by a national or international regulatory body, for example, in a part certification or part manufacture approval (PMA) process for the Federal Aviation Administration, the European Aviation Safety Agency, the Civil Aviation Administration of China, the Japan Civil Aviation Bureau, or the Russian Federal Agency for Air Transport. In these configurations, substantial conformance encompasses a determination that a particular part or structure is identical to, or sufficiently similar to, the specified airfoil, or rotor blade, or that the part or structure complies with airworthiness standards applicable to the specified rotor blade, or airfoil. In particular, substantial conformance encompasses any regulatory determination that a particular part or structure is sufficiently similar to, identical to, or the same as a specified rotor blade, or airfoil, such that certification or authorization for use is based at least in part on the determination of similarity.

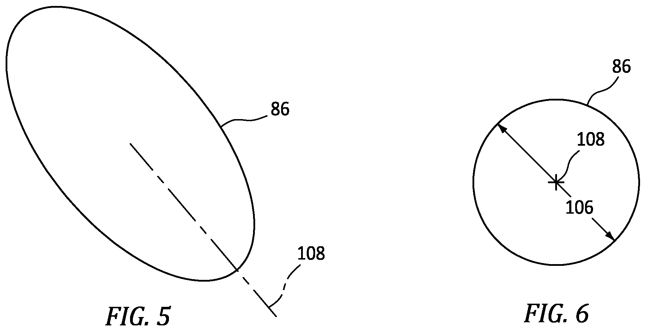

Referring to FIG. 5, each cooling hole 86 has an outlet geometry in the exterior surface. This outlet geometry may be oval or elliptical as shown in FIG. 5. Alternatively, the outlet geometry may be circular. Still alternatively, the outlet geometry may be wedge-shaped or otherwise shaped to facilitate, for example, diffusion of the cooling air being exhausted from / film cooling the respective rotor blade 78. The present disclosure, however, is not limited to such exemplary outlet geometries.

Referring to FIG. 6, each cooling hole 86 has a width 106 (e.g., a diameter) when viewed in a reference plane perpendicular to a centerline 108 of that cooling hole 86. This hole width 106 may be sized between 0.010 inches (0.025 cm) and 0.030 inches (0.076 cm). The present disclosure, however, is not limited to such exemplary cooling hole dimensions.

Referring to FIGS. 3 and 4, it is contemplated each rotor blade 78 may be formed with the cooling holes 86A according to the Table 1 coordinates, without the cooling holes 86B-D according to the Table 2 coordinates. It is contemplated each rotor blade 78 may be formed with the cooling holes 86B-D according to the Table 2 coordinates, without the cooling holes 86A according to the Table 1 coordinates. It is also contemplated each rotor blade 78 may be formed with the cooling holes 86 according to both the Table 1 and the Table 2 coordinates. Moreover, as indicated above, it is contemplated each rotor blade 78 may only include the specified cooling holes 86 of Tables 1 and 2. Alternatively, it is contemplated each rotor blade 78 may also include one or more cooling holes in addition to those specified cooling holes 86 of Tables 1 and/or 2.

Each rotor blade 78 and its members 80, 82 and 84 may be constructed from a high strength, heat resistant material such as a nickel-based or cobalt-based superalloy, or of a high temperature, stress resistant ceramic or composite material. One or more thermal barrier coatings, abrasion-resistant coatings or other protective coatings may be applied to the blade airfoil 84 and/or the blade platform 82. Each cooling holes 86 may pierce the coating(s) applied to the rotor blade members 82 and/or 84 at its outlet.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for a turbine engine (20), comprising:
an airfoil (84) including a first end (88), a second end (90), a leading edge (92), a trailing edge (94), a first side (98), a second side (100) and a plurality of cooling holes (86);
the leading edge (92), the trailing edge (94), the first side (98) and the second side (100) extending spanwise from the first end (88) to the second end (90);
the first side (98) and the second side (100) extending longitudinally between and meeting at the leading edge (92) and the trailing edge (94); and
the plurality of cooling holes (86) located in the airfoil (84) according to a set of Cartesian coordinates of Table 1, and the set of Cartesian coordinates of Table 1 describing distances from a point of origin (104) on the airfoil (84) to the plurality of cooling holes (86).

2. The apparatus of claim 1, wherein the point of origin (104) is located in a region of the airfoil (84) adjacent the first end (88) and the trailing edge (94).

3. The apparatus of claim 1 or 2, wherein the point of origin (104) is located on the first side (98).

4. The apparatus of claim 1, 2 or 3, wherein the point of origin (104) is coincident with one of the plurality of cooling holes (86).

5. The apparatus of any preceding claim, wherein the plurality of cooling holes (86) are located on the first side (98), optionally wherein the first side (98) is a concave side of the airfoil (84).

6. The apparatus of any preceding claim, further comprising a platform (82), the airfoil (84) connected to the platform (82) at the first end (88), and the airfoil (84) projecting spanwise out from the platform (82) to the second end (90).

7. The apparatus of any preceding claim, wherein the set of Cartesian coordinates set forth in the Table 1 have a diametrical true position tolerance of up to 0.040 inches (0.102 cm).

8. The apparatus of any preceding claim, wherein a first of the plurality of cooling holes (86) has a hole diameter (106) between 0.010 inches (0.025 cm) and 0.030 inches (0.076 cm).

9. The apparatus of any preceding claim, wherein the apparatus comprises a turbine blade (78), optionally a first stage turbine blade (78), and/or a high pressure turbine blade (78).

10. The apparatus of any preceding claim, wherein the plurality of cooling holes (86) are fluidly coupled to one or more internal volumes (102) within the airfoil (84).

11. An apparatus for a turbine engine (20), comprising:
a rotor blade (78) including an attachment (80), a platform (82) and the apparatus of any preceding claim;
the platform (82) between and integral with the attachment (80) and the airfoil (84);
the airfoil (84) projecting spanwise out from the platform (82) to the second end (90), the second end (90) being a tip end (90) of the airfoil (84).

12. The apparatus of any preceding claim, further comprising a or the rotor blade (78) comprising the airfoil (84) and a plurality of additional cooling holes (86) located in the rotor blade (78) according to a set of Cartesian coordinates of Table 2, and the set of Cartesian coordinates of Table 2 describe distances from the point of origin (104) on the airfoil (84) to the plurality of additional cooling holes (86).

13. The apparatus of any preceding claim, wherein the point of origin (104) is coincident with a radially innermost one of the plurality of cooling holes (86) in a downstream-most set of the plurality of cooling holes (86).

14. A turbine engine (20), comprising:
a flowpath (58), a compressor section (25), a combustor section (26) and a turbine section (27);
the flowpath (58) extending through the compressor section (25), the combustor section (26) and the turbine section (27) from an inlet (62) into the flowpath (58) to an exhaust (64) from the flowpath (58);
the turbine section (27) comprising a turbine rotor (70) with a plurality of turbine blades (78) arranged circumferentially about an axis in an array, and a first of the plurality of turbine blades (78) including the apparatus of any preceding claim, the airfoil (84) located in the flowpath (58).

15. The turbine engine of claim 14, wherein the turbine section (27) includes a high pressure turbine section (27A) and a low pressure turbine section (27B), and the high pressure turbine section (27A) includes the turbine rotor (78).
